# EUROPÄISCHE PATENTSCHRIFT

(11) **EP 0 447 892 B1**
(45) Veröffentlichungstag und Bekanntmachung des Hinweises auf die Patenterteilung: **19.04.1995**
(21) Anmeldenummer: 91103552.5
(22) Anmeldetag: 08.03.1991
(51) Int. Cl.: B23D 53/04

(54) **Vorrichtung zum Abtrennen von Sandwichelementen von einem kontinuierlich zugeführten Profilstrang**
Device for cutting off sandwich elements from a continuously fed profile
Machine à trancher des éléments sandwich d'un profilé en mouvement d'avancement continu

(30) Priorität: 19.03.1990 DE 4008775
(43) Veröffentlichungstag der Anmeldung: 25.09.1991
(73) Patentinhaber: Siempelkamp Handling Systeme GmbH & Co., 82515 Wolfratshausen (DE)
(72) Erfinder: Dimperl, Peter, W-8000 München 90 (DE); Schlüter, Klaus, W-8000 München 70 (DE); Ihbe, Joerg, W-8035 Gauting (DE); Schumacher, Wolfgang, W-8014 Neubiberg (DE)
(74) Vertreter: Andrejewski, Walter

(56) Entgegenhaltungen:
- EP-A- 0 210 095
- DE-A- 2 044 770
- DE-A- 3 500 751
- US-A- 3 474 693
- US-A- 3 518 909
- PATENT ABSTRACTS OF JAPAN, Band 12, Nr. 61 (M-671)[2908], 24. Februar 1988;& JP-A-62 208 821 (NIPPON RASEN K.K.) 14-09-1987

## Beschreibung

Die Erfindung betrifft eine Vorrichtung nach dem Oberbegriff des Patentanspruches.

Eine Vorrichtung dieser Art ist aus der DE-OS 35 00 751 bekannt. Sie ist häufig sog. Doppelbandanlagen nachgeschaltet, in denen die Profile, bestehend aus Schaumstoffkern und vorwiegend festen Deckschichten als endloser Strang hergestellt werden. Von diesem Strang werden durch eine Säge die Sandwichelemente in der gewünschten Länge abgelängt. Während des Sägeschnittes wird das Sägeaggregat mit dem Strang verspannt, d.h. das Sägeaggregat bewegt sich synchron in Produktionsrichtung mit, während die eigentliche Säge den senkrecht zur Produktionsrichtung stattfindenden Sägeschnitt ausführt. Anschließend wird das Sägeaggregat in seine Ausgangsposition zurückbewegt, während in Querrichtung das Sägeaggregat nicht verfahren wird. Wenn, wie bei der Vorrichtung gemäß DE-OS 35 00 751, ein Sägeband verwendet wird, dann ist es erforderlich, dieses zumindest in dem Abschnitt, der den Sägeschnitt durchführt, so zu orientieren, daß die Zähne in Schnittrichtung zeigen. Damit dieses möglich ist, ist eine Wendestation am Ein- und Auslauf von den über und unter dem zu trennenden Strang liegenden Umlenkrädern um 180° nach jedem Schnitt schwenkbar, d.h. durch die Schwenk- oder Drehbewegung der Wendestation wird das Sägeband mitgewendet, so daß die Sägezähne in Schnittrichtung immer vorne liegen. Da zwei derartige, verhältnismäßig aufwendig konstruierte Wendestationen vorhanden sind, ist es erforderlich, ein drittes Umlenkrad für das Sägeband vorzusehen, das immer außerhalb der Schnittebene seitlich versetzt ist. In der Schnittebene entsteht ein durch die drei Umlenkräder gebildetes Dreieck, wobei das in der Schnittebene liegende Umlenkrad in der einen Ausgangsschnittstellung an der einen Seite des Profilstranges und in der anderen Ausgangsschnittstellung mindestens um die Breite des Profilstranges von dieser Seite entfernt liegt. Hierdurch entsteht eine sehr aufwendige Konstruktion mit drei Umlenkrädern und komplizierten Dreh- oder schwenkbaren Wendestationen. Weiterhin beansprucht die Vorrichtung einen sehr großen Raum seitlich von der Fördereinrichtung, da Platz für das Dritte Umlenkrad vorhanden sein muß.

Der Erfindung liegt nun die Aufgabe zugrunde, eine Vorrichtung der eingangs genannten Art zu schaffen, die einfach aufgebaut ist, möglichst wenig Raum beansprucht und einen stets sauberen Schnitt durchführt.

Zur Lösung dieser Aufgabe werden die Merkmale des Kennzeichens des Anspruchs 1 vorgeschlagen.

Erfindungsgemäß sind die Wendeeinrichtungen nicht dreh- oder schwenkbar, d.h. es handelt sich um einfache Elemente, die lediglich dafür sorgen, daß das Sägeband beim Auflaufen und beim Ablaufen von den Umlenkrädern um 90° in die Schnittebene gedreht wird, wobei die Sägezähne jeweils in die gleiche Richtung zeigen, d.h. daß sowohl das in Schnittrichtung vorne liegende als auch das hinten liegende Sägeband im Bereich des Schnittes um 90° in die Schnittebene gedreht wird. Insoweit handelt es sich um eine herkömmliche Bandsäge mit zwei Umlenkrädern, von denen eines unterhalb und eines oberhalb des zu durchtrennenden Profilstranges liegt. Die vier Wendeeinrichtungen liegen ebenfalls außerhalb des Schnittbereiches. Das gesamte Sägeaggregat, im wesentlichen bestehend aus den Umlenkrädern, dem Sägeband und den Wendeeinrichtungen, ist um 180° nach jedem Schnitt drehbar, so daß die Sägezähne in beiden Abschnitten, d.h. im Vorlauf- und im Rücklaufabschnitt immer in Schnittrichtung zeigen. Wenn ein Schnitt durchgeführt ist, wird, wie üblich, die Kopplung mit dem Profilstrang gelöst, der Rahmen mit dem Sägeaggregat zurück gegen die Förderrichtung in Ausgangsposition gefahren und dabei das Sägeaggregat um seine senkrechte Achse um 180° gedreht, damit zur Durchführung des nächsten Schnittes die Sägezähne wieder in Schnittrichtung zeigen. Bei Durchführung eines Schnittes laufen beide Abschnitte des Sägebandes durch die Schnittfuge, wobei der in Schnittrichtung vorne liegende Abschnitt den eigentlichen Schnitt durchführt, der folgende Abschnitt aber ebenfalls mit seinen Zähnen in Schnittrichtung zeigt und so auf jeden Fall ein Verklemmen verhindert und gleichzeitig eine Nacharbeitung, beispielsweise die Entfernung eines Schnittgrates, stattfindet.

Die erfindungsgemäße Vorrichtung ist relativ einfach aufgebaut, da nur zwei Umlenkräder und einfache Wendeeinrichtungen vorhanden sind. Das Sägeaggregat ist im wesentlichen von herkömmlicher Bauart und es beansprucht neben dem Profilstrang nur einen verhältnismäßig geringen Raum auf beiden Seiten. Außerdem wird eine Biegewechselbeanspruchung des Sägebandes vermieden.

Im folgenden wird die Erfindung unter Hinweis auf die Zeichnung anhand eines Ausführungsbeispiels näher erläutert.

Es zeigt:
- Fig. 1: einen Querschnitt durch eine Ausführungsform nach der Erfindung mit dem Sägeaggregat auf der einen Seite des Profilstranges vor Durchführung eines Trennschnittes;
- Fig. 2: einen der Fig. 1 entsprechenden Schnitt, jedoch mit dem Sägeaggregat nach Durchführung eines Trennschnittes und Schwenkung um 180° (siehe im vergrößerten Maßstab seitlich dargestelltes Sägeband); und
- Fig. 3: einen den Fig. 1 und 2 entsprechenden Schnitt, wobei das Sägeaggregat aus der in Fig. 2 dargestellten Stellung einen Schnitt durchgeführt hat, aber noch keine Schwenkung des Sägeaggregates um 180° stattgefunden hat.

In der Zeichnung ist lediglich die Vorrichtung zum Abtrennen von Sandwichelementen dargestellt. Die Produktionsvorrichtung ist eine bekannte Doppelbandanlage mit Dosier- und Mischstation sowie einer besonderen Einrichtung zum Auftrag des Kunststoffgemisches auf die untere Deckschicht vor dem Einlauf in die Doppelbandanlage. In der Doppelbandanlage entsteht ein endloser Strang durch Aufschäumen, der oben und unten vorzugsweise durch eine feste Deckschicht kaschiert ist. Die Vorrichtung zum Abtrennen ist der Doppelbandanlage nachgeschaltet und dient dem Abtrennen der Sandwichelemente in der gewünschten Länge.

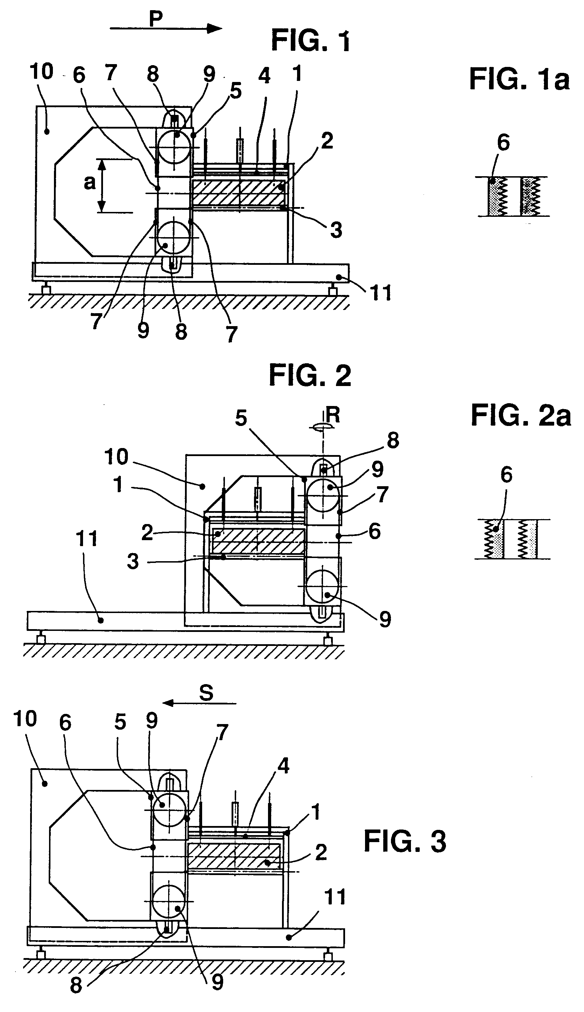

In den Figuren 1 bis 3 ist eine Rollenbahn 3 dargestellt, auf der der Profilstrang 2 nach dem Austreten aus der nicht gezeigten Doppelbandanlage abgestützt wird. Ein Rahmen ist mit 10 bezeichnet. Dieser Rahmen ist in Produktionsrichtung auf Schienen 11 verfahrbar. An einem Gestell 1 des Rahmens ist eine Spanneinrichtung 4 zur Kopplung mit dem Profilstrang 2 angebracht.

An dem Rahmen 10 ist das eigentliche Bandsägeaggregat 5 so gelagert, daß es um eine senkrechte Achse um 180° schwenkbar und quer zur Produktionsrichtung des Profilstranges 2 bewegbar ist. Diese Querbewegung ist durch strichpunktierte Linien angedeutet. Die Schwenklager sind mit 8 bezeichnet. Das Bandsägeaggregat besteht im wesentlichen aus den Umlenkrädern 9 unterhalb und oberhalb des zu trennenden Profilstranges 2, dem Sägeband 6 und den Wendeeinrichtungen 7. Der Abschnitt des Sägebandes 6 zwischen den Wendeeinrichtungen 7 ist in Fig. 1 mit a bezeichnet. Dieser Abschnitt legt die maximale Schnitthöhe fest. Zur Anpassung an die Schnitthöhe können die Wendeeinrichtungen grundsätzlich in senkrechter Richtung, d.h. in Bewegungsrichtung des Sägebandes 6, verstellt werden, wenn dieses erforderlich erscheint.

Im folgenden wird in Verbindung mit den Fig. 1 bis 3 die Durchführung von zwei Trennschnitten, je von einer Seite, beschrieben.

Ausgehend von der in Fig. 1 dargestellten Stellung des Bandsägeaggregates 5, in der die Ausrichtung der Sägezähne links im vergrößerten Maßstab dargestellt sind, wird die gesamte Vorrichtung durch die Spanneinrichtung 4 mit dem kontinuierlich geförderten Profilstrang 2 gekoppelt, wenn eine Schnittstellung erreicht ist. Dann wird das Sägeaggregat relativ zu dem Rahmen 10 zur Durchführung des Trennschnittes in die in Fig. 2 dargestellte Stellung bewegt. Der Rahmen 10 bewegt sich aufgrund der Verspannung hierbei gleichzeitig auf den Schienen 11 in Produktionsrichtung, so daß der Schnitt senkrecht zur Produktionsrichtung erfolgt. Die Bewegungsrichtung zur Durchführung dieses ersten Schnittes ist in Fig. 1 durch den Pfeil P angegeben.

Im Anschluß daran, wenn die in Fig. 2 gezeigte Stellung eingenommen wird, wird die Kopplung gelöst und das Sägeaggregat 5 in Richtung des Pfeiles R um die senkrechte Achse um 180° geschwenkt oder gedreht, so daß die Sägezähne die rechts im vergrößerten Maßstab dargestellte Richtung einnehmen, wobei das Sägeaggregat mit dem Rahmen 10 in Längsrichtung wieder in die Ausgangsstellung zurückfährt. Die Vorrichtung ist dann bereit, den zweiten Schnitt durchzuführen, wobei die Sägezähne wiederum in Schnittrichtung zeigen. Der zweite Schnitt läuft entsprechend ab, nachdem die Kopplung hergestellt wurde, wenn die gewünschte Sandwichlänge erreicht ist. Nach Durchführung dieses zweiten Schnittes in Richtung des Pfeiles S in Fig. 3 nimmt das Bandsägeaggregat 5 relativ zu dem Rahmen 10 die in Fig. 3 gezeigte Stellung ein. Wenn dann das Sägeaggregat wiederum um 180° um die senkrechte Achse gedreht oder geschwenkt wird, steht es wieder in der Stellung nach Fig. 1.

Beim Durchlaufen des Sägebandes durch die Schnittfuge liegen immer die Sägezähne vorne, d.h. in Schnittrichtung. Hierdurch entsteht ein sauberer Schnitt und es erfolgt keine Behinderung der Bewegung des Sägebandes durch die seitlich angrenzenden Seitenwände des gerade getrennten Profilstranges.

Es ist auch möglich, an dem nachlaufenden Abschnitt des Sägebandes eine Oszillation oder dergleichen (geringfügiges Verdrehen) durch eine geeignete Einrichtung durchzuführen, um ggf. für eine Nacharbeitung (Endgratung usw.) zu sorgen.

Schließlich ist es auch noch möglich, das Sägeblatt in seiner Drehrichtung umzukehren, um einen Schnitt "von oben nach unten" durchzuführen. Das Sägeblatt muß dann entsprechend gezahnt werden, d.h. andersherum auf die Räder aufgelegt werden.

## Patentansprüche

1. Vorrichtung zum Abtrennen von Sandwichelementen von einem kontinuierlich zugeführten Profilstrang (2), der aus einer Verbundbahn aus einem mit Deckschichten kaschierten Schaumstoffkern, insbesondere aus Polyurethan, besteht, mit einem der Förderanlage für den Profilstrang (2) zugeordneten, mit diesem verfahrbaren und wieder zurückfahrbaren Rahmen (10), und einem quer zur Förderrichtung des Profilstranges verfahrbaren Bandsägeaggregat (5), dessen endloses Sägeband (6) am Ein- und Auslauf der Umlenkräder (9) durch Wendeeinrichtungen (7) um 90° in die Schnittebene gedreht ist, dadurch gekennzeichnet, daß insgesamt vier Wendeeinrichtungen (7), je einer an einem Ein- und Auslaufabschnitt der beiden Umlenkräder (9) vorgesehen sind, daß die Wendeeinrichtungen (7) in Bezug auf das Sägeband (6) nicht dreh- oder schwenkbar sind, und daß das gesamte Bandsägeaggregat (5) nach jedem Sägeschnitt um seine senkrechte Achse um 180° schwenkbar ist, so daß die Sägezähne der durch den Profilstrang bewegten Vor- und Rücklaufabschnitte des Sägebandes (6) in eine Richtung, nämlich die Schnittrichtung, zeigen.

2. Vorrichtung nach Anspruch 1, dadurch gekennzeichnet, daß das Bandsägeaggregat (5) an dem Rahmen (10) quer zur Produktionsrichtung zur Durchführung des Sägeschnittes, bewegbar und an diesem Rahmen um 180° schwenkbar ist.

## Claims

1. A device for cutting off sandwich elements from a continuously fed sectional length (2), which consists of a composite strip comprising a foamed material core, made of polyurethane in particular, covered with facings, the device having a frame (10) which is associated with the conveying installation for the sectional length (2), which frame can travel with the sectional length and can move back again, and having a bandsaw unit (5) which can travel transversely to the direction of conveying of the sectional length, the endless saw band (6) of which is rotated by 90° into the plane of cut, at the run-in and run-out of the deflection pulleys (9), by turning devices (7), characterised in that a total of four turning devices (7) is provided, one at each run-in and run-out section of the two deflection pulleys (9), that the turning devices (7) cannot rotate or swivel in relation to the saw band (6), and that the entire bandsaw unit (5) can swivel by 180° about its vertical axis after each saw cut, so that the saw teeth of the advance and return sections of the saw band (6) which are moved through the sectional length point in one direction, namely in the direction of cut.

2. A device according to claim 1, characterised in that the bandsaw unit (5) on the frame (10) can move transversely to the direction of production for effecting the saw cut, and can swivel by 180° on the said frame.

## Revendications

1. Dispositif pour trancher des éléments sandwichs d'un profilé (2) amené en continu et composé d'une bande composite constituée d'un noyau de matière alvéolaire doublé de couches de recouvrement, en particulier en polyuréthanne, comprenant un cadre (10) associé au système de transport pour le profilé (2), qui peut être déplacé et ramené avec ledit système de transport, et un groupe de scie à ruban (5) déplaçable transversalement à la direction de transport du profilé, dont le ruban de scie (6) sans fin est tourné de 90° dans le plan de coupe, à l'entrée et à la sortie des roues de renvoi (9) par des dispositifs de renversement (7), caractérisé en ce qu'il comprend au total quatre dispositifs de renversement (7), à savoir respectivement un à la section d'entrée et de sortie des deux roues de renvoi (9), que les dispositifs de renversement (7) ne peuvent tourner ou pivoter par rapport au ruban de scie (6), et que l'ensemble du groupe de scie à ruban (5) peut tourner après chaque sciage de 180° autour de son axe vertical de manière que les dents de scie des sections d'avancement et de retour du ruban de scie (6) traversant le profilé sont orientées dans une même direction, à savoir dans la direction de coupe.

2. Dispositif selon la revendication 1, caractérisé en ce que le groupe de scie à ruban (5) sur le cadre (10) peut être déplacé transversalement à la direction de production pour effectuer le sciage et pivoté de 180° sur ledit cadre.
